# EUROPEAN PATENT SPECIFICATION

(11) **EP 0 806 703 B1**
(45) Date of publication and mention of the grant of the patent: **13.08.2003**
(21) Application number: 95916096.1
(22) Date of filing: 14.04.1995
(51) Int. Cl.: G03B 17/56, B66F 11/04, F16M 11/42

(54) **BOOM CRANE FOR A CAMERAMAN**
KAMERAMANNAUSLEGERKRAN
GRUE A FLECHE DE CAMERAMAN

(30) Priority: 29.04.1994 UA 94042097
(43) Date of publication of application: 12.11.1997
(73) Proprietor: Kokush, Anatoly Akimovich, Kiev, 252216 (UA)
(72) Inventor: Kokush, Anatoly Akimovich, Kiev, 252216 (UA)
(74) Representative: Hano, Christian, Dipl.-Ing.
(86) International application number: PCT/UA95/00002
(87) International publication number: WO 95/030174

(56) References cited:
- WO-A-91/06802
- WO-A-94/16357
- DE-A- 2 541 894
- FR-E- 56 509
- GB-A- 2 163 720
- SU-A- 487 366
- US-A- 4 952 953

## Description

### Technical field

The present invention relates to the field of machines for lifting loads, and in particular to boom cranes for a cameraman to be used for movement of a shooting apparatus during film-or television-program shooting.

### Background art

A boom crane for a cameraman is known (RU-A-2,028,271), wherein a shooting apparatus comprising a boom installed on a support by means of a hinged coupling that provides turning around in both vertical and horizontal planes and consists of at least two parts connected by additional couplings, a cantilever with a system of crane boom mass compensation (counterweight), central and lateral struts with rope pulleys on the ends thereof, and tension wires extending around the pulleys, one end thereof being connected with stretching mechanisms arranged on the end of a cantilever and the other end thereof being connected with the additional couplings.

The known device has the disadvantage that the shooting apparatus arranged on the above-mentioned crane can be moved only in vertical and horizontal planes so as to follow all movements of the end of the crane boom, so that it can not provide views which are necessary for shooting an object located within a hemisphere circumscribed by an end of a crane boom radius.

US-A-4 952 953 describes a camera mounting arrangement comprising a carriage and a movable counter weight.

### Disclosure of the invention

The problem underlying the invention is to provide a boom crane for a cameraman permitting the film or television shooting of an object positioned at any point within the hemisphere circumscribed by the end of the crane boom radius, from any view.

The technical result that can be obtained by the present invention is the fact that the mass center of the boom is kept constant with regard to the hinge thereof for turning around in vertical plane during reciprocating of the shooting apparatus along the boom of the crane.

The underlying problem is solved by a crane as set out in the claims.

By using in the proposed boom crane for a cameraman a hollow boom assembled of at least two elements and installed on a support turnable in vertical and horizontal planes, a system of crane boom mass compensation, struts, tension wires extending around the struts, tension wire stretching mechanisms, a carriage with a shooting apparatus arranged on the assembled hollow crane boom for reciprocal movement and connected by means of a rope-pulley system with a counterweight thereof, which is arranged on rollers inside the assembled hollow crane boom, and the sections of the outer and inner surfaces of the assembled hollow crane boom serving as guide means for the rollers of the carriage with the shooting apparatus and the rollers of the counterweight, respectively, along the whole length of the boom, a smooth and free movement of the shooting apparatus within area of the hemisphere circumscribed by the end of the crane boom radius is achieved, which essentially enhances the possibilities of shooting an object.

It is the features claimed for in the boom crane for a cameraman, i.e. the carriage with a shooting apparatus arranged on the assembled hollow crane boom for reciprocal movement and connected by means of a rope-pulley system with a counterweight thereof, which is arranged on the rollers inside the assembled hollow crane boom, which permit the reciprocal movement of the shooting apparatus on a boom crane for a cameraman during film or televison shooting along the crane boom und thus allow to solve the underlying problem.

### Short description of the drawings

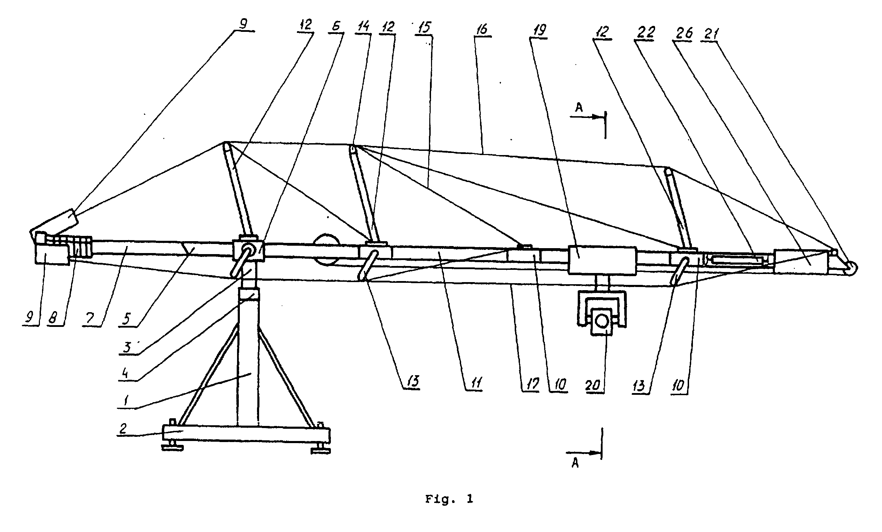

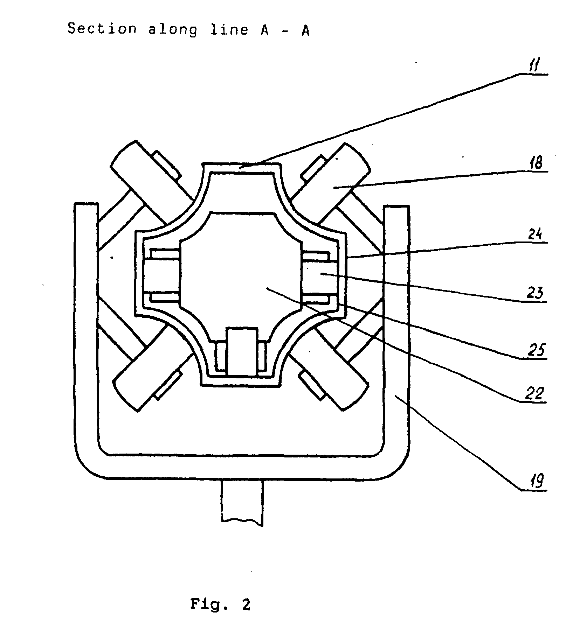

A general view of the boom crane for a cameraman is shown in Fig.1 (side view). Fig. 2 shows the sectional view A-A of the boom crane, explaining the method for moving a shooting apparatus on a boom crane for a cameraman during film or televison and the design of the boom crane for a cameraman.

The boom crane for a cameraman has a support 1 (Fig. 1) provided with a fixed base 2. The boom crane is on the support 1 by a bearing unit 4 so that a column 3 can turn around a vertical axis of the support 1. A central section 5 is turnably mounted on the column 3 by means of a bearing unit 6 for turning in a vertical plane running through the central section 5. On one side of the central section 5 a cantilever 7 is fixed on which a big counterweight 8 (or a boom mass compensation element) for balancing the crane and stretching mechanisms 9 are arranged.

On the other side of the central section 5 sections of an assembled hollow boom 11 are attached by connecting couplings 10. On the connecting couplings 10 there are arranged central struts 12 and lateral struts 13 the free ends of which are provided with guides 14 for laying of tension wires 15 having one end fastened to the connecting couplings 10 and the another end fastened to the tensioning mechanisms 9 of the central tension wires 16 and the lateral tension wires 17, respectively.

On the assembled hollow boom 11 a carriage 19 with a shooting apparatus 20 is arranged on rollers 18 (Fig. 2), connected by means of a rope-pulley system 21 with a counterweight 22 thereof arranged inside the assembled hollow boom 11 on rollers 23. Sections of the outer surfaces 24 and inner surfaces 25 of the assembled hollow boom 11 serve as guide means for the rollers 18 of the carriage 19 with the shooting apparatus 20 and for the rollers 23 of the counterweight 22, respectively, along the whole length thereof.

A trolley 26 is arranged on the assembled hollow boom 11 for picking up and tensioning of a connecting cable for the shooting apparatus 20.

### Embodiment of the invention

The shooting apparatus 20 (Fig. 1) is mounted on the carriage 19 with the rollers 18 on the end of the assembled hollow boom 11 of the crane while an object for shooting is placed at a particular distance from the assembled hollow boom 11 within its turning radius in its opposite part closer to the counterweight 8.

In order to choose an appropriate view for shooting of the object, a cameraman turns the assembled hollow boom 11 toward the object and translates the shooting apparatus 20 along the outer guide surface sections 24 of the assembled hollow boom 11 toward the object, i.e. to the side of the counterweight 8.

Simultaneously the counterweight 22 moves on the rollers 23 parallel to the advance movement of the shooting apparatus 20 along the inner guide surface sections 25 of the assembled hollow boom 11 in the opposite direction (toward the boom end), toward the end of the boom along the inner guides 25 of the boom 11, whereby the center of mass of the assembled hollow boom 11 is kept constant relative to the bearing unit 6 for turning the boom in the vertical plane.

The apparatus is moved until the necessary view for shooting the object is achieved.

## Claims

1. A boom crane for a cameraman comprising
- a central section (5) mounted on a support (1) and being turnable in vertical and horizontal planes,
- a cantilever (7) fixed on one side of the central section (5), a big counterweight (8) for balancing the crane being arranged on the cantilever (7) and
- a boom (11) attached on the other side of the central section (5),
- a carriage (19) with a shooting apparatus (20) arranged on the boom (11) for reciprocating movement, a counterweight (22) of the carriage (19) and the shooting apparatus (20 being connected to the carriage (19) by means of a rope-pulley system (21),
- whereby while moving of the carriage (19) with the shooting apparatus (20) in one direction the counterweight (22) thereof moves in the opposite direction, such that the center of mass of the boom 11 is kept constant.

2. A boom crane for a cameraman according to claim 1, **characterized in that** the boom (11) is hollow and assembled from at least two elements, whereby the counterweight (22) is arranged on rollers (23) inside the crane boom (11).

3. A boom crane for a cameraman according to claim 1, **characterized by** struts (12, 13), tension wires (15, 16, 17) extending around the struts (12, 13) and tension wire stretching mechanisms (9).

## Patentansprüche

1. Auslegerkran für einen Kameramann mit
- einem Zentralabschnitt (5), der an einem Träger (1) angebracht und in vertikalen und horizontalen Ebenen drehbar ist,
- einem Kragarm (7), der auf einer Seite des Zentralabschnitts (5) befestigt ist, wobei ein großes Gegengewicht (8) für die Herstellung des Gleichgewichts des Kranes an dem Kragarm (7) angeordnet ist und
- einem Ausleger (11), der auf der anderen Seite des Zentralabschnitts (5) angebracht ist,
- einem Schlitten (9) mit einer Aufnahmevorrichtung (20), der an dem Ausleger (11) für eine hin- und hergehende Bewegung angeordnet ist, wobei ein Gegengewicht (22) des Schlittens (19) und der Aufnahmevorrichtung (20) mit dem Schlitten (19) mittels eines Seilrollensystems (21) verbunden ist,
- wobei während einer Bewegung des Schlittens (19) mit der Aufnahmevorrichtung (20) in eine Richtung sich sein Gegengewicht (22) in die entgegengesetzte Richtung bewegt, so dass der Massenmittelpunkt des Auslegers (11) konstant gehalten wird.

2. Auslegerkran für einen Kameramann nach Anspruch 1, **dadurch gekennzeichnet, dass** der Ausleger (11) hohl und aus wenigstens zwei Elementen zusammengesetzt ist, wobei das Gegengewicht (22) auf Rollen (23) innerhalb des Kranauslegers (11) angeordnet ist.

3. Auslegerkran für einen Kameramann nach Anspruch 1, **gekennzeichnet durch** Streben (12, 13), Spanndrähte (15, 16, 17), die sich um die Streben (12, 13) erstrecken, und Spanndrahtspannmechanismen (9).

## Revendications

1. Grue à flèche de caméraman, comprenant :
- une section centrale (5) montée sur un support (1) et pouvant pivoter dans des plans verticaux et horizontaux,
- un bras en porte-à-faux (7) fixé sur l'autre côté de la section centrale (5), un gros contrepoids (8) pour équilibrer la grue étant disposé sur le bras en porte-à-faux (7) et
- une flèche (11) fixée sur l'autre côté de la section centrale (5),
- un chariot (19) avec un appareil de prise de vues (20) disposé sur la flèche (11) pour un mouvement de va-et-vient, un contrepoids (22) du chariot (19) et l'appareil de prise de vues (20) étant connecté au chariot (19) au moyen d'un système câbles-poulies (21),
- en déplaçant le chariot (19) avec l'appareil de prise de vues (20) dans une direction, son contrepoids (22) se déplaçant dans la direction opposée, de telle sorte que le centre de masse de la flèche (11) est maintenu constant.

2. Grue à flèche de caméraman selon la revendication 1, **caractérisée en ce que** la flèche (11) est creuse et assemblée à partir d'au moins deux éléments, le contrepoids (22) étant disposé sur des galets (23) à l'intérieur de la flèche de grue (11).

3. Grue à flèche de caméraman selon la revendication 1, **caractérisée par** des montants (12, 13), des câbles de tension (15, 16, 17) s'étendant autour des montants (12, 13) et des mécanismes tendeurs de câbles de tension (9).
